# EUROPEAN PATENT APPLICATION

(11) **EP 3 000 940 A1**
(43) Date of publication of application: **30.03.2016**
(21) Application number: 15186741.3
(22) Date of filing: 24.09.2015
(51) Int. Cl.: E02B 3/12, E01C 9/08, E02D 17/20, E04H 17/16, A01G 1/08

(54) **DEVICE AND METHOD FOR MANUFACTURING A BRUSHWOOD PART, AS WELL AS THE OBTAINED BRUSHWOORD PART**

(30) Priority: 26.09.2014 NL 2013534
(71) Applicant: Handelsonderneming van Schaik Langbroek V.O.F., 4031 KR Ingen (NL)
(72) Inventor: JONGENOTTER, Albertus Theodorus, 4031 KR INGEN (NL)
(74) Representative: Melchior, Robin

(57) **Abstract**

The invention relates to a device and a method for manufacturing a brushwood part, in particular a fascine mattress, as well as the brushwood part or fascine mattress thus obtained. The brushwood part comprises a mat made of branches wherein the branches in the mat extend in a common main direction, transverse to the longitudinal direction of the mat. The device comprises upper wire guides and lower wire guides for guiding upper wires and lower wires, respectively, in passage direction along the branches, connectors for connecting the upper wires and lower wires to each other, and furthermore a separation assembly for separating the first batch of branches from the next batch of branches for the same mat after having fed the first batch of branches. The device comprises couplers for arranging coupling elements between the consecutive batches, which coupling elements couple the upper wires between the consecutive batches to the lower wires.

## Description

### BACKGROUND OF THE INVENTION

The invention relates to a device and a method for manufacturing a brushwood part, in particular a fascine mattress, as well as to the obtained brushwood part or fascine mattress itself.

Fascine mattresses are weips or mats having a large surface area intended to protect the banks and bottoms of rivers and other bodies of water against the eroding action of the flow. These mats have been manufactured according to the same method for over a century. The known mats are assembled in-situ by hand from two layers of brushwood branches, for instance of willow branches or wicker, which are tied together on a bottom fabric of for instance geotextile and/or in combination with an intermediate layer of filling wood. Per layer the branches extend substantially parallel to each other. The branches in one layer to the other are connected to each other in a crosswise bond so as to create a composite cross-layer or a grid. The crosswise bond provides the mat with the required firmness both in longitudinal direction and lateral direction.

The manufacturing of brushwood parts is hard to automate. Particularly the various shapes, lengths and irregularities in willow wood and the specific crosswise bond required for the firmness of the mat makes it particularly difficult to realise a machine that is capable of creating uniform mats.

It is an object of the invention to provide a device and method for manufacturing a brushwood part, in particular a fascine mattress, as well as an alternative brushwood part or fascine mattress that can be manufactured using the above-mentioned device and method.

### SUMMARY OF THE INVENTION

According to a first aspect the invention provides a device for manufacturing a brushwood part, in particular a fascine mattress, wherein the brushwood part comprises a mat made of branches, wherein the branches of the mat have been bundled by a plurality of longitudinal wires circumferentially extending in a longitudinal direction of the mat and wherein the branches extend in a common main direction in the mat, transverse to the longitudinal direction of the mat, wherein the device comprises a processing section having a passage channel for in a passage direction feeding through several batches of branches for the mat, wherein the branches in their main direction extend transverse to the passage direction, wherein the processing section furthermore comprises upper wire guides and lower wire guides for guiding upper wires and lower wires, respectively, in the passage direction along the branches that have been fed through, wherein the processing section comprises connectors for connecting the upper wires and the lower wires to each other at the outer ends of the mat, when considered in the longitudinal direction of the mat, for forming the circumferentially extending longitudinal wires, wherein the processing section is provided with a separation assembly for, after feeding a first batch of branches, separating the first batch of branches from a next batch of branches for the same mat, wherein the processing section furthermore comprises couplers for arranging coupling elements between the consecutive batches, which coupling elements couple the upper wires between the consecutive batches to the lower wires.

Because the branches can be fed trough and processed with a common main direction, mechanized handling and processing them into a brushwood part can be simplified to a large extent. In cooperation with the longitudinal wires the coupling elements to be arranged between the consecutive batches are able to provide the brushwood part with the firmness the mat requires, despite the fact that all branches in the mat extend in a common main direction. The brushwood part manufactured using this device is therefore sufficiently firm and/or rigid to serve as an alternative for the manually manufactured brushwood part. Manufacturing brushwood parts by machine may among other things increase the efficiency of the manufacturing process, improve the uniformity of the consecutively manufactured brushwood parts and the manufacturing process will be less taxing in terms of labour.

In one embodiment, during said coupling, the separation assembly is situated downstream, in passage direction, from the couplers in order to keep the couplers free, in passage direction, from the first batch of branches. In that way the couplers are able to operate freely in the passage channel, without being hampered by the batch of branches.

In one embodiment the separation assembly comprises longitudinal wire guides for during coupling keeping the upper wires and lower wires in position relative to the couplers. The keeping in position can improve the accuracy with which the couplers engage the upper wires and lower wires.

In one embodiment the coupling elements are staples, wherein each coupler is provided with an upper wire bender and a lower wire bender for receiving and bending a length of wire, in particular a lon wire (in Dutch: londraad), around the upper and lower wire, respectively, extending at the location of the coupler. The staples may provide a simple and effective solution for counteracting the coupled upper wires and lower wires moving apart.

In one embodiment the couplers have been arranged on a coupling work beam, wherein the coupling work beam is movable between an operative position in which the couplers can be positioned in a coupling position in the passage channel for coupling the upper wires to the lower wires and an inoperative position in which the couplers are situated outside of the passage channel. In case no coupling takes place, the passage channel can be kept open for other operations in the manufacturing process of the brushwood part.

In one embodiment the connectors have been arranged on a connector work beam, wherein the connector work beam is movable between an operative position in which the connectors can be positioned in a connecting position in the passage channel and an inoperative position in which the connectors are situated outside of the passage channel. In case no connection is made, the passage channel can be kept open for other operations in the manufacturing process of the brushwood part.

In one embodiment the operative position of the coupling work beam and the operative position of the connector work beam are the same operative position, wherein the coupling work beam and the connector work beam are adapted for alternately being moved into the operative position. As a consequence the connection and coupling can take place alternately.

In one embodiment each connector comprises a winding element for engaging the upper wire and lower wire extending at the location of the winding element, wherein the winding element is adapted for being rotated in a winding direction for several revolutions in order to wind the engaged upper wire and the lower wire into each other. Preferably the winding element of the connector in question is provided with an incised winding profile for allowing the upper wire and lower wire extending at the location of the winding element to pass through in passage direction, wherein the winding profile is provided with oppositely oriented hook-shaped incisions that are open in the winding direction for receiving the upper wire and the lower wire. The incisions are able to receive the upper wire and lower wire at rotation of the winding element in the winding direction, confine them and then take them along in the winding direction for forming a winding.

In one embodiment the winding element is adapted for winding the upper wire and lower wire extending at the location of the winding element into each other in passage direction on either side of the winding element, wherein each connector is furthermore provided with a cutting element for cutting through the upper wire and the lower wire between both windings in passage direction. The winding at the opposite side of the brushwood part to be manufactured may form the leading winding of a next brushwood part. By separating the upper wires and lower wires between both windings from each other, the brushwood parts to be consecutively manufactured can be separated from each other.

In one embodiment the device furthermore comprises a feeding section for feeding branches and for supplying the fed branches in consecutive batches to the processing section, wherein the feeding section is provided with a loading bin for receiving the branches and a pushing element movable through the loading bin for driving the branches fed into the loading bin to the processing section in separate batches. The pushing element may take away the necessity of manually driving the branches into the passage opening, which may be dangerous due to the presence of moving parts in the passage channel, such as the couplers and connectors.

In one embodiment the pushing element is adapted for cooperation with the separation assembly for pressing the next batch of branches together between the pushing element and the separation assembly, when the separation assembly separates the first batch of branches from the next batch of branches. A mechanized pushing element can achieve a high pressing force that cannot be realised when feeding manually.

Preferably the pushing element has a pressing force of at least one hundred kilogram, preferably at least two hundred kilogram and most preferably at least five hundred kilogram. Additionally or alternatively the pushing element has a pressing force in the range of up to at least five thousand kilogram, preferably up to at least six thousand kilogram and most preferably up to a maximum of seven thousand kilogram. With such an (adjustable) range a high density of branches can be achieved, which may contribute to the firmness and/or rigidity of the brushwood part.

In one embodiment the pushing element is movable in passage direction to beyond the separation assembly for driving the batch of branches to beyond the separation assembly. The batch of branches can therefore be reliably transferred to and confined downstream of the separation assembly. In that way it can be counteracted that branches are being left behind in the part of the passage channel upstream of the separation assembly.

In one embodiment the pushing element is adapted for returning to an initial position of pushing into the loading bin, outside of the passage channel. As a result the passage channel can be left open for other operations in the manufacturing process of the brushwood part, while the pushing element returns.

According to a second aspect the invention provides a method for manufacturing a brushwood part, in particular a fascine mattress, using the device described above, wherein the method comprises the steps of:
a) connecting the upper wires and the lower wires to each other at the leading outer end of the brushwood part to be manufactured in passage direction;
b) feeding through a first batch of branches for the mat in passage direction;
c) guiding the upper wires and lower wires in passage direction along the first batch of branches;
d) after feeding a first batch of branches, separating the first batch of branches from the next batch of branches;
e) arranging coupling elements between the consecutive batches, which coupling elements couple the upper wires between the consecutive batches to the lower wires;
f) repeating steps b) up to and including g) for the next batch and/or several next batches;
g) connecting the upper wires and the lower wires to each other at the trailing outer end of the brushwood part to be manufactured after feeding the last batch of branches for the mat in passage direction, in order to form the circumferentially extending longitudinal wires together with the connections obtained according to step a) at the leading outer end of the brushwood part to be manufactured.

Because the branches can be fed trough and processed with a common main direction, mechanized handling and processing them into a brushwood part can be simplified to a large extent. In cooperation with the longitudinal wires the coupling elements to be arranged between the consecutive batches are able to provide the brushwood part with the firmness the mat requires, despite the fact that all branches in the mat extend in a common main direction. The brushwood part manufactured using this device is therefore sufficiently firm and/or rigid to serve as an alternative for the manually manufactured brushwood part. Manufacturing brushwood parts by machine may among other things increase the efficiency of the manufacturing process, improve the uniformity of the consecutively manufactured brushwood parts and the manufacturing process will be less taxing in terms of labour.

In one embodiment the method comprises between steps b) and d) the step of pressing the batch of branches fed in step b) together. Preferably the batch fed in step b) is pressed together using a pressing force of at least one hundred kilogram, preferably at least two hundred kilogram and most preferably at least five hundred kilogram. Additionally or alternatively the batch fed in step b) is pressed together using a pressing force in a range of up to at least five thousand kilogram, preferably up to at least six thousand kilogram and most preferably up to a maximum of seven thousand kilogram. Pressing the branches together may contribute to the firmness and/or rigidity of the brushwood part.

In one embodiment the upper wires and lower wires are connected to each other in step a) and/or step g) by winding the upper wire and lower wire in question into each other. Winding may be a simple yet reliable way of connecting the wires, in particular steel wires, to each other, without having to add glue, connection components or thermal energy (when welding).

In one embodiment the method comprises after step g) the step of cutting through the upper wires and lower wires upstream in passage direction of the connection at the trailing outer end of the brushwood part to be manufactured. In that way the manufactured brushwood part can be separated from the lower wires and upper wires that are still connected to the device.

In one embodiment step g) regarding the connection to each other of the upper wires and lower wires at the trailing outer end of the brushwood part to be manufactured also causes the connection to each other according to step a) of the upper wires and lower wires of a next brushwood part to be manufactured upstream of the brushwood part manufactured in steps a) up to and including g), wherein the method comprises repeating the steps b) up to and including g) for the next brushwood part. In that way several brushwood parts can consecutively be manufactured, wherein the above-mentioned method may increase the uniformity of the brushwood parts and/or the efficiency of the manufacturing process.

According to a third aspect the invention provides a brushwood part, in particular a fascine mattress, comprising a mat made of branches, wherein the branches of the mat have been bundled by a plurality of longitudinal wires circumferentially extending in a longitudinal direction of the mat, wherein at least ninety percent of the branches in the bundle extend in a common main direction in the mat, transverse to the longitudinal direction of the mat, wherein each longitudinal wire comprises an upper wire extending at a first side of the mat along the branches and a lower wire extending along a second, opposite side of the mat along the branches, wherein the mat has been built up in the longitudinal direction from several batches of the branches between which coupling elements have been arranged that couple the upper wires between the consecutive batches to the lower wires.

Preferably all or substantially all branches in the mat extend in a common main direction. Therefore there is no question of a grid connection or crosswise connection between the branches in the entire mat. The branches of the bundle extending in the common main direction can form a single-layer mat of the brushwood part.

The brushwood part described above can - despite substantially all branches in the mat extending in a common main direction - still be used effectively on banks and bottoms of bodies of water, as the coupling elements, in cooperation with the longitudinal wires, are capable of providing the mat with the required firmness.

In one embodiment the percentage by volume of branches in relation to or relative to the overall volume of the brushwood part is at least twenty-five percent, preferably at least thirty percent and most preferably at least forty percent. Manually manufactured mats have a considerably lower density. Said high density can be attained by manufacturing the brushwood part using the method and/or device described above. The brushwood part may as a result - despite the fact that substantially all branches in the mat extend in a common main direction - still be used effectively on the banks and bottoms of bodies of water, as the coupling elements, in cooperation with the longitudinal wires and the pressing force during manufacturing the brushwood part, are capable of providing the mat with high density and firmness.

The overall volume of the brushwood part, in the context of the invention, can be calculated by multiplying the length, width and thickness of the mat by each other, not taking any irregularities and/or rounding-off of the brushwood part at its outer ends into account. The brushwood part is therefore simplified into a geometric block.

In one embodiment the coupling elements are staples, wherein the outer ends of the staples have been bent around the upper wire and the lower wire, respectively. The staples can offer a simple coupling capable of effectively counteracting the coupled upper wire and lower wire moving apart.

In one embodiment the upper wires and lower wires are connected to each other per longitudinal wire at the outer ends of the mat considered in longitudinal direction of the mat, by winding them into each other. Winding may be a simple yet reliable way of connecting the wires, in particular steel wires, to each other, without having to add glue, connection components or thermal energy (when welding).

In one embodiment the number of longitudinal wires is at least five and preferably at least seven. In a preferred embodiment or alternatively thereto the intermediate distance between the longitudinal wires in a direction perpendicular to the longitudinal direction is forty centimetres at the most, and preferably thirty centimetres at the most. By adjusting the number of longitudinal wires and/or the intermediate distance between them to the requirements set above, a firm and/or reliable bundling of the branches in the mat can be achieved.

In one embodiment of the brushwood part the intermediate distance between the coupling elements per longitudinal wire is thirty centimetres at the most, and preferably twenty centimetres at the most. A short intermediate distance between the coupling elements may improve the consistency and retaining of the shape of the brushwood part.

In one embodiment the branches are brushwood branches, in particular branches from the group of brushwood comprising willow, ash, alder, oak, spruce-fir or a combination thereof.

In one embodiment the brushwood part is provided with plants that are connected to the mat, preferably helophytes and/or marsh plants. The plants may ensure that the mats are better suited to the underwater ecosystem.

The brushwood part described above is obtained or can be obtained in particular using the method described above. The brushwood part can therefore be obtained in a mechanized manner. Due to the specific steps of the method the brushwood part can moreover also be provided with the required firmness and/or rigidity for use on banks or bottoms. In particular due to the high pressing force in one of the steps of the method described above, a brushwood part of very high branch density can be achieved, higher than would be possible when manufactured manually. The high density can further augment the firmness and/or rigidity of the brushwood part.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### BRIEF DESCRIPTION OF THE DRAWINGS

The invention will be elucidated on the basis of a number of exemplary embodiments shown in the attached schematic drawings, in which:
figure 1A shows a side view of a device for manufacturing a brushwood part according to the invention, provided with a winding assembly, a coupling assembly and a separation assembly;
figure 1B shows view in perspective of the device according to figure 1A;
figure 2A shows a view in perspective of the winding assembly of the device according to figures 1A and 1B;
figure 2B shows a view in perspective of a detail of the winding assembly according to the circle II B in figure 2A;
figures 2C and 2D show a front view and a side view, respectively, of the winding assembly according to figure 2B;
figure 3A shows a view in perspective of the coupling assembly of the device according to figures 1A and 1B;
figure 3B shows an exploded view in perspective of a detail of the coupling assembly according to the circle III B in figure 3A;
figures 3C and 3D show front views of the coupling assembly according to figure 3B;
figure 4 shows a view in perspective of the separation assembly of the device according to figures 1A and 1B;
figures 5A-5L show side views of the device according to figure 1 during the steps of a method for manufacturing the brushwood part according to the invention;
figure 6A shows a front view of the brushwood part according to the invention;
figures 6B and 6C show a front view of a detail according to the circle VI B in figure 6A and a cross-section according to the line VI C - VI C in figure 6A, respectively; and
figure 7 shows the same cross-section as figure 6C, wherein the brushwood part is provided with plants.

### DETAILED DESCRIPTION OF THE DRAWINGS

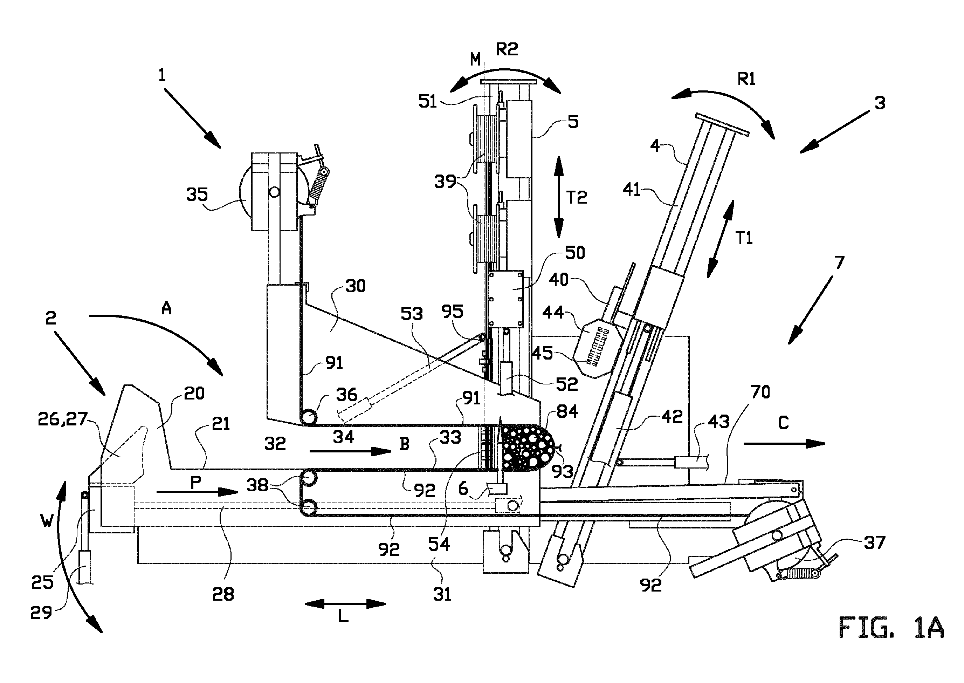

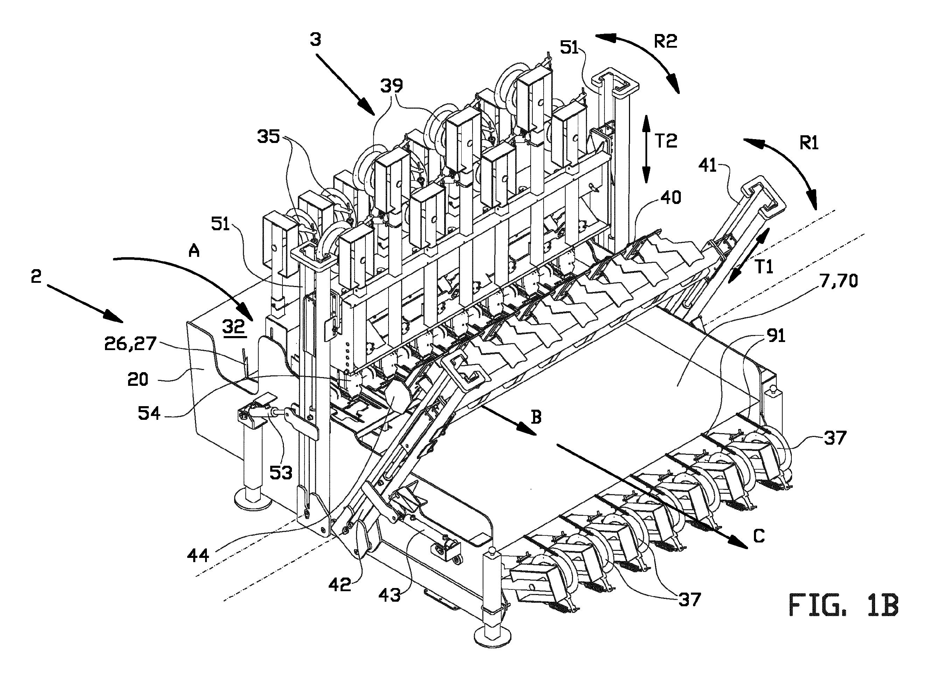

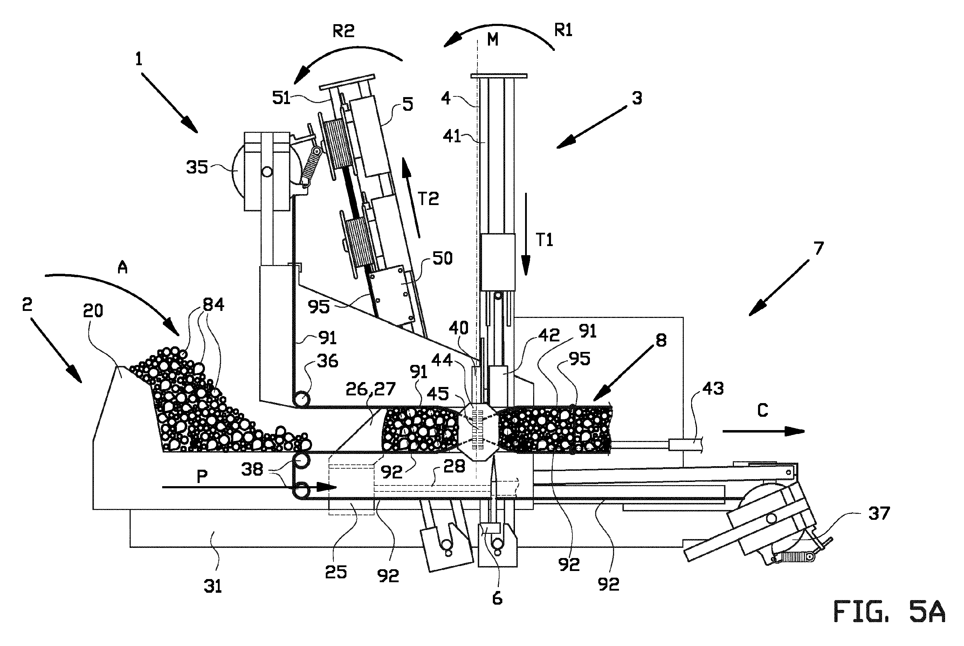

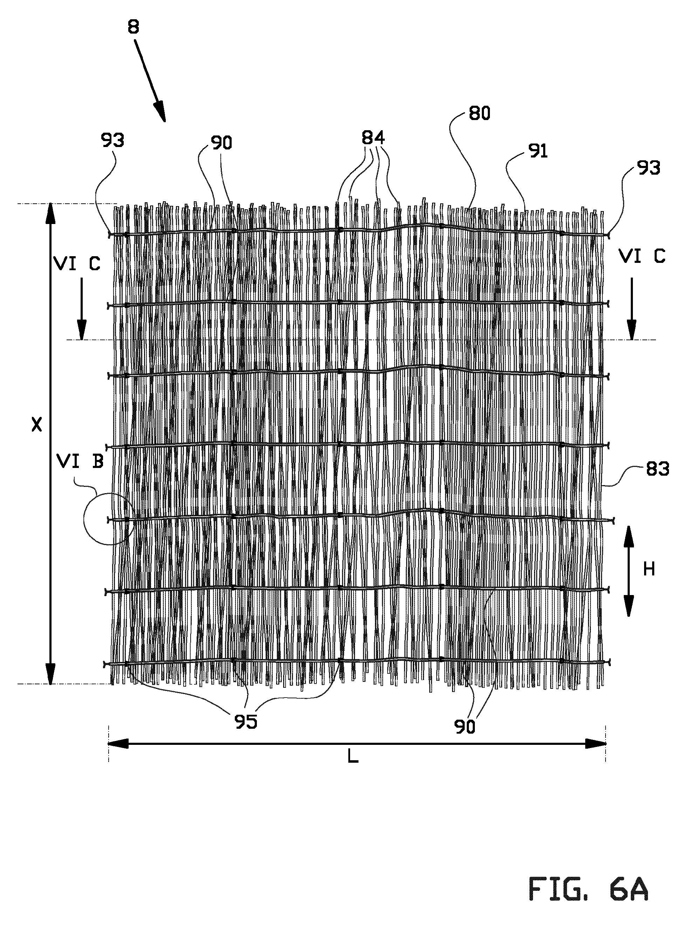

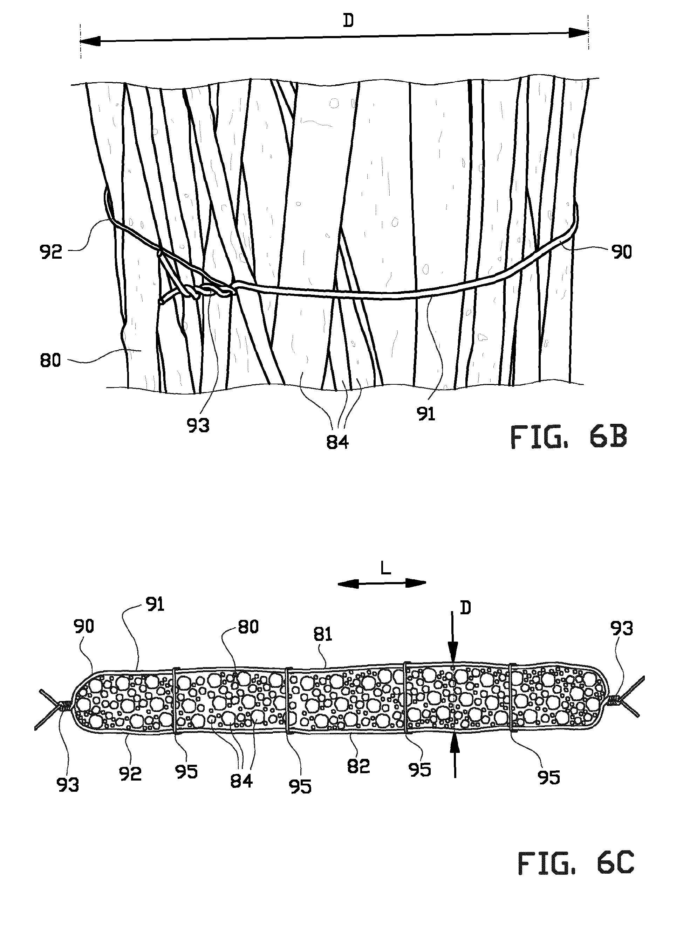

Figures 1-4 show a device 1 for manufacturing brushwood parts, in particular fascine mattresses 8. Figures 5A-5L show the steps of the method for manufacturing brushwood parts using the above-mentioned device 1. Finally figures 6A-C show the fascine mattress 8 obtained using the device and method. In the following description a fascine mattress 8 is described intended for protecting the banks and bottoms of rivers and other bodies of water against the eroding action of the flow. The brushwood parts according to the invention can furthermore be used as mattress on a bank at the transition from water to land, as shoring part along the waterside, as silt fencing against blowing of sand in dunes, as a decorative element when screening off or laying out gardens, as floating element or as bio-degradable aprons.

As shown in figures 6A-6C, the fascine mattress 8 comprises a weip or mat 80 having a flat upper side 81 and a flat bottom side 82 and a substantially square or rectangular outer contour 83. The mat 80 has a thickness D, for instance of ten, fifteen or twenty centimetres or an adjustable thickness D, a width of two metres in a width direction or transverse direction X and a length of two metres or a multiple thereof in a manufacturing direction or longitudinal direction L.

The mat 80 is composed of a bundle of a plurality of one-year old or multi-annual sticks, cloves or branches 84 of brushwood, in particular of willow, ash, alder, oak or spruce-fir. The branches 84 have been sawn off at the desired breadth of the mat 80. The branches 84 are a product of nature as a result of which the shape per branch 84 may differ. The course of the branches 84 may be fanciful and/or irregular. During manufacturing the branches 84 may get damaged resulting in the final shape in the bundle being different from the original, natural shape. However, the branches 84 predominantly have clear longitudinal directions, which in the bundled condition in the mat 80 extend in a common main direction H, parallel to or substantially parallel to the transverse direction W and/or transverse or perpendicular to the longitudinal direction L of the mat 80. In particular at least ninety percent of the branches 84 and preferably substantially all branches 84 in the bundle of branches 84 extend in the main direction H. Within the bundle of branches 84 and/or in the entire mat 80 there will therefore be no question of a grid bond between the branches 84.

The fascine mattress 8 further comprises a plurality of longitudinal wires 90, preferably of untreated, galvanised or stainless steel, extending in the longitudinal direction L of the mat 80 in a circumferential direction around the mat 80 and forming a loop around the bundle of branches 84. In this case the mat 80 has been provided with seven longitudinal wires 90 which in the width direction X are proportionally divided or arranged at a regular intermediate distance from each other, for instance every other thirty centimetres. The longitudinal wires 90 extend circumferentially in the longitudinal direction L of the mat 80 or extend in the longitudinal direction L around the mat 80. Each longitudinal wire 91 is composed of an upper wire 91 and a lower wire 92 extending along the upper side 81 and the bottom side 82 of the mat 80, respectively. The upper wire 91 and lower wire 92 are connected to each other in the longitudinal direction L at the outer ends of the mat 80 by a connection, in particular a winding 93. The fascine mattress 8 is provided with a plurality of coupling elements 95 in form of lon wires, staples or lon wires bent like staples, preferably of untreated, galvanised or stainless steel. The coupling elements 95 extend substantially perpendicular to the upper side 81 and the bottom side 82 of the mat 80 straight through the mat 80 between the upper wire 91 and the lower wire 92 to connect or couple the upper wire 91 and the lower wire 92 to each other straight through the mat 80. In terms of length the coupling elements 95 have been adjusted to the thickness D of the mat 80, so that the upper wire 91 and the lower wire 92 are kept together by the coupling elements 95 at the thickness D of the mat 80. In the longitudinal direction L of the mat 80, the coupling elements 95 are proportionally divided or arranged at a regular intermediate distance, of for instance every other twenty centimetres, between the upper wire 91 and the lower wire 92. The upper wire 91 and the lower wire 92 of each longitudinal wire 90 are therefore kept at substantially the thickness D of the mat by a plurality of coupling elements 95 over the full length of the mat 80 in the longitudinal direction L.

The fascine mattress 8 according to the invention acquires its rigidity and/or firmness because the branches 84 in the bundle of branches 84 are bundled in the device 1 at a high pressing force in a manner to be further described, and because the longitudinal wires 90 and coupling elements 95 retain the desired shape of the mat 80 in mutual cooperation. This results in a fascine mattress 8 wherein the overall volume of the fascine mattress 8 consists of branches 84 for at least twenty-five percent, preferably at least thirty percent and most preferably at least forty percent. In specific cases, for instance with relatively thin branches 84, densities of up to eighty percent may even be achieved. The overall volume of the mat 80, in the context of the invention, can be calculated by multiplying the length, width and thickness of the fascine mattress 8 with each other, not taking any irregularities and/or rounding-off of the brushwood part at its outer ends into account. The fascine mattress 8 is therefore simplified into a geometric block. The percentage by volume taken up by the branches is measured by immersing the fascine mattress 8 in water and measuring the water displacement and dividing it by the overall volume of the fascine mattress 8.

As shown in figures 1A and 1B the device 1 for manufacturing the fascine mattress 8 described above, comprises a feeding section 2, a processing section 3 and a discharge section 7. Branches 84 are sawn to size and supplied to the feeding section 2 in a feeding direction A. The branches 84 are subsequently supplied in a passage direction B and fed through by the processing section 3 to be subsequently discharged in a discharge direction C via the discharge section 7. In this example the feeding section 2, the processing section 3 and the discharge section 7 have been placed in line, as a result of which the feeding direction A, the passage direction B and the discharge direction C are parallel to each other. The fascine mattresses 8 to be manufactured are fed through in the longitudinal direction L of the mats 80. The passage direction B therefore is the same as the longitudinal direction L of the mats 80 to be manufactured.

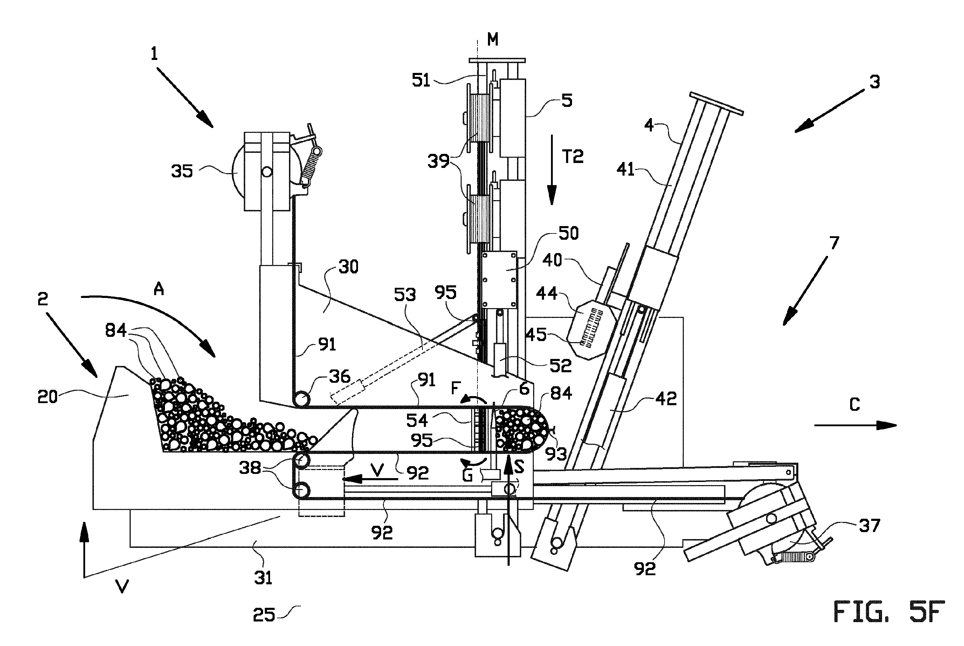

The feeding section 2 comprises a tank or loading bin 20 for in the feeding direction A receiving a quantity of cut-to-size branches 84 and a pushing element 25 for in the passage direction B pushing or pressing the fed branches 84. The loading bin 20 is provided with a bottom 21 having slots extending in the passage direction B. The pushing element 25 is movable in a press direction P parallel to the passage direction B and is provided with a pressure head 26 having upright pressure plates 27 extending through the slots in the bottom 21 of the loading bin 20. The pushing element 25 is provided with a linear drive 28, preferably a pneumatic or hydraulic cylinder, for moving the pressure head 26 in the press direction P. The pressing force in the press direction P preferably can be adjusted in a range from one hundred to at least five thousand kilogram, preferably at least six thousand kilogram, and most preferably up to a maximum of seven thousand kilogram. The pushing element 25 can be pulled back through the passage channel 34 into the initial position at the beginning of the loading bin 20. In a first part of the return path, as shown in figure 5F, the pushing element 25 is pulled back by the press drive 28 in a direction opposite the passage direction B. In a second part of the return path V the pushing element 25 is pulled down, in particular by the retraction drive 29 as shown in figure 1A, in a downward rotation U about the downstream attachment point of the pushing element 25. In that way the pressure surfaces 26 can be brought to below the transport surface 33 of the passage channel 34 and return below the bottom 21 of the loading bin 20 to the initial position of the pressure path as shown figure 1A.

The feeding section 3 comprises a superstructure 30 and a substructure 31 jointly defining a feeding opening 32. The feeding opening 32 has a height equalling the desired thickness D of the mat 80 of the fascine mattress 8 to be manufactured. The feeding opening 32 is in open connection with the loading bin 20 for receiving the branches 84 from the loading bin 20. In particular the substructure 31 is provided with a transport surface 33 that seamlessly merges into the bottom 21 of the loading bin 20. The feeding opening 32 debouches into a passage or passage channel 34 in which the fed branches 84 are divided into individual batches in order to build up the mat 80 of the fascine mattress 8 to be manufactured, in parts. At the location of the superstructure 30 the feeding section 3 is provided with first wire reels 35. The first wire reels 35 supply the upper wires 91 of the longitudinal wires 90. The upper wires 91 of the first wire reels 35 are guided along and parallel to the upper side of the passage channel 34 via a set of upper wire guides 35, for instance rolls. At the location of the substructure 31 the feeding section 3 is furthermore provided with second wire reels 37. The second wire reels 37 supply the lower wires 92 of the longitudinal wires 90. The lower wires 92 of the second wire reels 37 are guided along and parallel to the lower side of the passage channel 34 via a set of lower wire guides 38, for instance rolls, in preparation of bundling the branches 84 fed into the passage channel 34. Finally the feeding section is provided with third wire reels 39 for supplying the lon wires for the staples 95. The number of first wire reels 35, the number of second wire reels 37 and the number of third wire reels 39 is adapted to the desired number of longitudinal wires 90 and the coupling elements 95 to be arranged in between them, in this case seven.

As shown in figures 1A and 1B the feeding section 3 is furthermore provided with a winding assembly 4 for winding the upper wires 91 and lower wires 92 into each other, a coupling assembly 5 for connecting or coupling the upper wires 91 and the lower wires 92 to each other by means of the coupling elements 95 and a separation assembly 6 for separating or dividing the fed branches 84 into different batches for building up the mat 80 of the fascine mattress 8 to be manufactured, in parts.

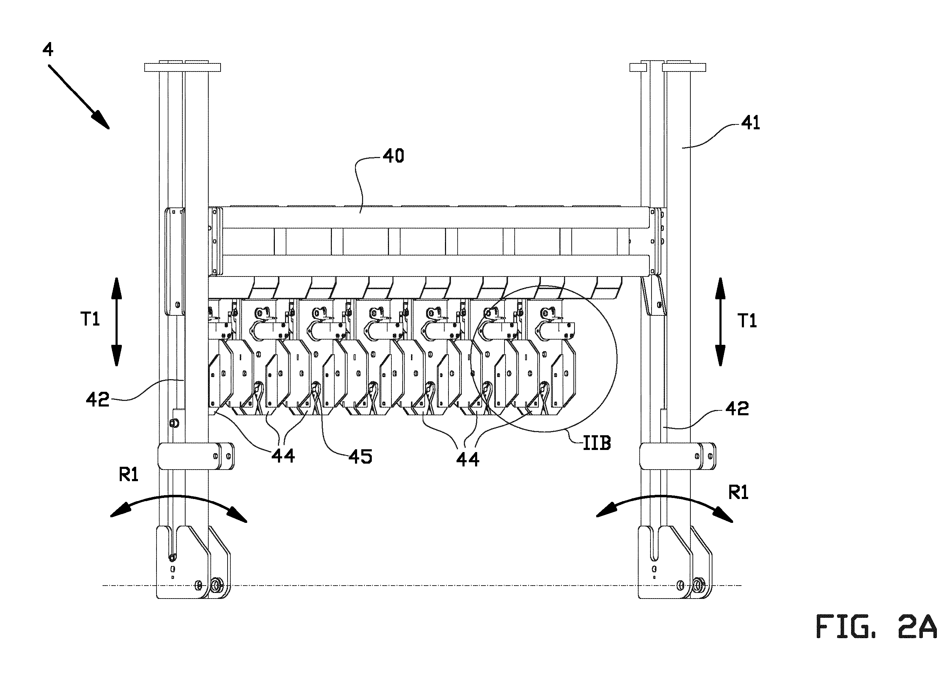

The winding assembly 4 is shown in exploded condition in figure 2A. The winding assembly 4 comprises two upright columns 41 with a horizontal connector work beam 40 suspended between them. The connector work beam 40 is connected to the columns 41 via a first translation drive 42, in this example a linear drive such as pneumatic or hydraulic cylinders, and can be moved up and down in the first translation direction T1 parallel to the columns 41 by means of the first translation drive 42. As shown in figures 1A and 1B, the columns 41 are connected to the substructure 31 via a first rotary drive 43, in this example a linear drive such as pneumatic or hydraulic cylinders, and can be moved relative to the substructure 31 by means of the first rotary drive 43 in a first rotation R1 about a first centre line of rotation, between a first inoperative position and an operative position M. Figure 2A shows that the winding assembly 4 is provided with a number of connectors 44 that have been suspended from the connector work beam 40. The number of connectors 44 is adapted to the number of longitudinal wires 90 to be wound. The intermediate distance between the connectors 44 along the connector work beam 40 is adjustable, depending on the intermediate distance between the longitudinal wires 90 in the fascine mattress 8 to be manufactured.

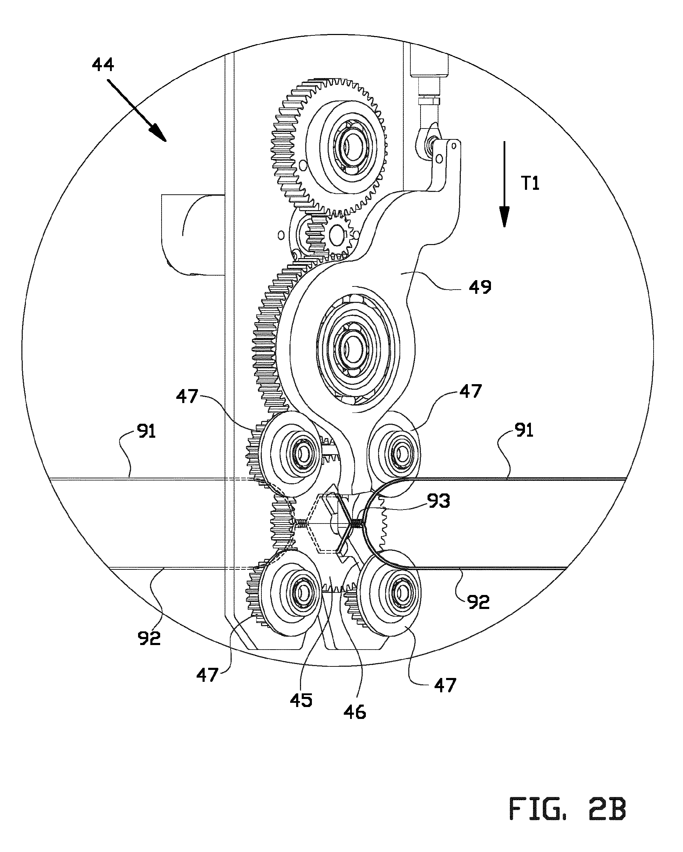

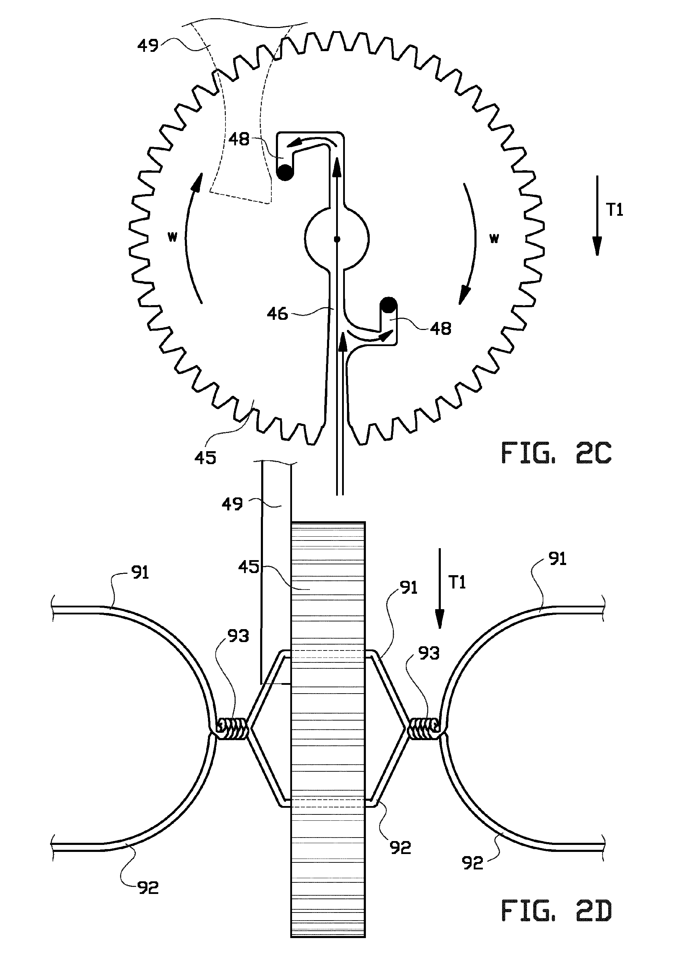

In figure 2B one of the connectors 44 is shown in exploded condition. Each connector 44 comprises a winding element 45, in this example a winding gear wheel, with a winding profile 46 incised or made therein. The winding element 45 can be rotated in a winding direction W for several revolutions. In this example the winding gear wheel is driven by a set of planetary positioned driving gear wheels 47. As shown in figure 2C the winding profile 46 is open in radial direction of the winding element 45 for receiving and subsequently retaining the upper wire 91 and the lower wire 92. The winding element 45 with its opening of the winding profile 46 is oriented vertically downward and moved downward together with the connector work beam 40 in the first translation direction T1, wherein the opening in the winding profile 46 is consecutively slid over the upper wire 91 and the lower wire 92. The winding profile 46 is Z-shaped having hook-shaped or serif-shaped incisions or outer ends 48 that are open in winding direction W for receiving the upper wire 91 and lower wire 92. At rotation of the winding element 45 in the winding direction W the hooks or serifs 48 of the Z-shape are adapted for receiving and, in the winding direction W, confining the upper wire 91 and the lower wire 92, respectively. In that way the upper wire 91 and the lower wire 92 can be taken along in the winding rotation W. After several revolutions of the winding element 45 in winding direction W the upper wire 91 and the lower wire 92 are twined into each other both upstream and downstream of the connector 44, as shown in figure 2D, for forming the windings 93 described above.

Each connector 44 is furthermore provided with a cutting element 49, in this example in the form of a spoon. The cutting element 49 is movable on either side of the winding element 45 into a cutting position in which the cutting element 49 severs the upper wire 91 and the lower wire 92 between the obtained windings 93 in order to separate the longitudinal wires 90 of fascine mattresses 8 to be consecutively manufactured.

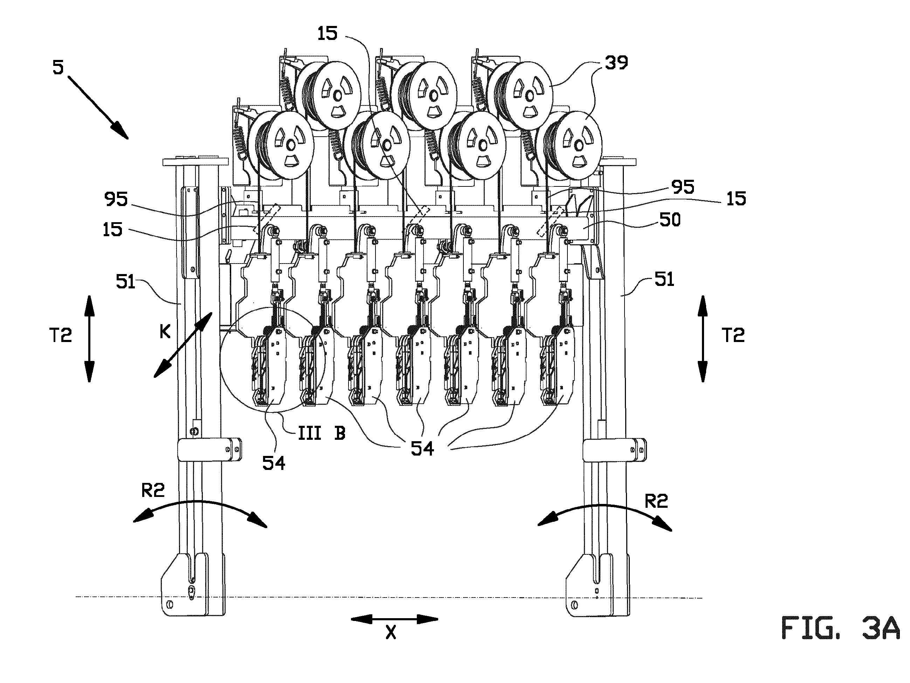

The coupling assembly 5 is shown in exploded condition in figure 3A. Just like the winding assembly 4, the coupling assembly 5 comprises two upright columns 51 with a horizontal coupling work beam 50 suspended between them. The coupling work beam 50 is connected to the columns 51 via a second translation drive 52, in this example a linear drive such as pneumatic or hydraulic cylinders, and can be moved up and down in the second translation direction T2 parallel to the columns 51, by means of the second translation drive 52. The coupling assembly 5 is furthermore provided with a sideward drive 15 between the coupling work beam 50 and the columns 51, for moving the coupling work beam 50 relative to the columns 51 in transverse direction X. In this example the sideward drive 15 is designed as a linear drive(shown in dots), placed inclined, but it may also be a horizontal linear drive which in cooperation with the second translation drive 52 functions as XY-drive for obtaining the inclined downward motion K.

As shown in figures 1A and 1B, the columns 51 are connected to the substructure 31 via a second rotary drive 53, in this example a linear drive such as pneumatic or hydraulic cylinders, and can be moved relative to the substructure 31 by means of the second rotary drive 53 in a second rotation R2 about a second centre line of rotation, between a second inoperative position and the same operative position M as the one of the winding assembly 4. Considered parallel to the passage direction B, the second inoperative position of the coupling assembly 5 is situated at the opposite side of the operative position M relative to the first inoperative position of the winding assembly 4, so that the winding assembly 4 and the coupling assembly 5 are able to alternate in the operative position M, without having to pass by each other in the process. The first wire reels 35 on the superstructure 30 of the feeding section 3 have been placed at sufficient distance from the coupling assembly 5 for allowing its second rotation R2 into the inoperative position.

As shown in figure 3A, the second wire reels 37 have been arranged at the upper side of the coupling assembly 5 for supplying the wire for the coupling element 95, in this example a lon wire (in Dutch: londraad) for forming a staple 95. The coupling assembly 5 further comprises a number of couplers 54 that have been suspended below the second wire reels 37 from the coupling work beam 50. The number of couplers 54 is adapted to the number of longitudinal wires 90 to be wound. The intermediate distance between the couplers 54 along the coupler work beam 50 is adjustable, depending on the intermediate distance between the longitudinal wires 90 in the fascine mattress 8 to be manufactured.

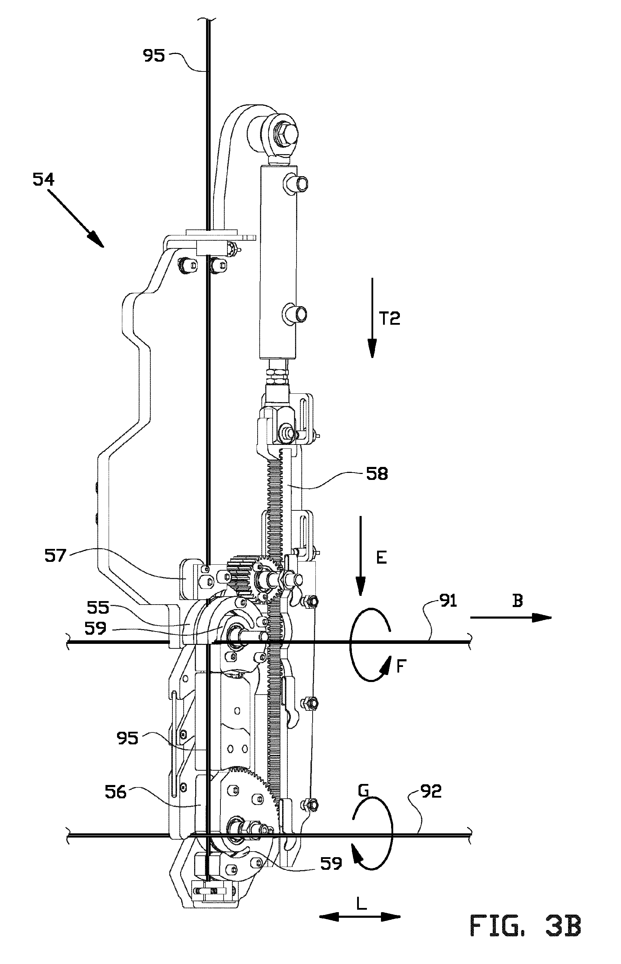

In figure 3B one of the couplers 54 is shown in exploded condition. Each coupler 54 comprises an upper wire bender 55, a lower wire bender 56 and a wire cutter 57. Each coupler 54 has furthermore been provided with a coupling drive 58 for in opposite bending directions F, G rotating the wire benders 55, 56 at least one hundred and eighty degrees. In this example the coupling drive 58 is designed like a linear drive, such as a pneumatic or hydraulic cylinder, which by means of a gear rack transmission in drive direction E is directly coupled to one of the wire benders, in this example the lower wire bender 56, and via a reverse gear to the upper wire bender 55. Both the upper wire bender 55 and the lower wire bender 56 have been provided with a recess 59 that is arched or has the shape of a segment of a circle, which recess has an arch length of at least one hundred and eighty degrees for during the rotation in the opposite bending directions F, G accommodating the upper 91 wire and the lower wire 92, respectively. The distance between the wire benders 55, 56 in the translation direction T2 can be set, and is set at a distance corresponding with the desired thickness D of the fascine mattress 8 to be manufactured, and therefore with the distance between the upper wire 91 and the lower wire 92.

Together with the coupling work beam 50, the couplers 54 are moved along the columns 51 in the second translation direction T2. When the coupling assembly 5 has been rotated into the operative position M, the couplers 54 can therefore be taken in a downward translation direction T2 in a position at the level of the upper wires 91 and the lower wires 92. In particular the couplers 54 have been placed such that the curved recesses 59 of the wire benders 55, 56 are situated in the respective bending directions F, G opposite the respective upper wires 91 and lower wires 92. The coupling work beam 50 is subsequently moved by the sideward drive 15 in a downwardly inclined motion K in the transverse direction X for accommodating the upper wires 91 and lower wires 92 in the curved recesses 59.

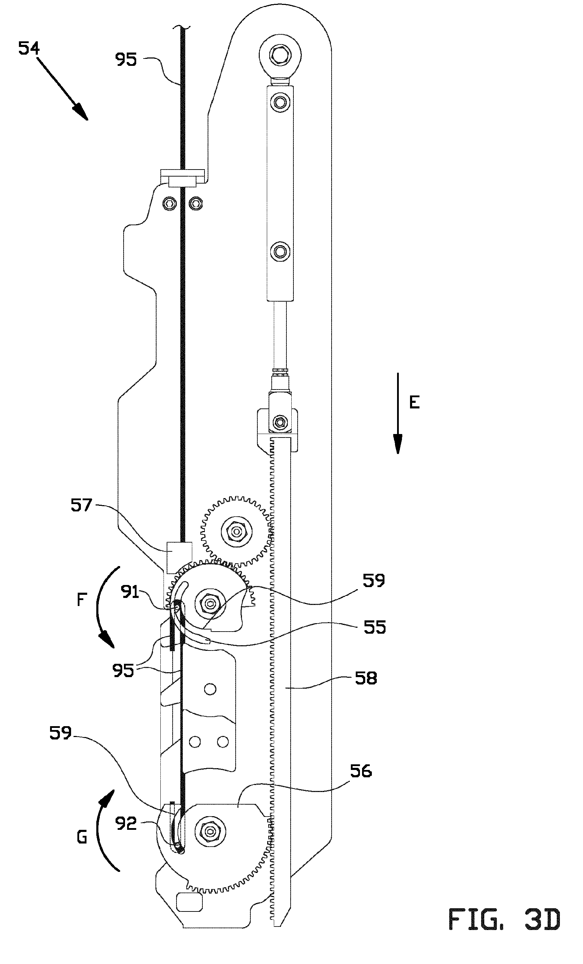

The wire cutter 57 is adapted for cutting off a length of the lon wire 95 after the latter has been introduced along the upper wire bender 55 and down to the lower wire bender 56. The lower wire bender 56 is adapted for bending the leading outer end of the lon wire 95 before it is cut off by the wire cutter 57, so that the lon wire cannot fall out of the coupler 54. Subsequently the lon wire 95 is bent around at the level of the upper wire bender 55, wherein the upper wire bender 55 cuts off the lon wire 95 in cooperation with the wire cutter 57. This results in a trailing outer end of the lon wire 95. The upper wire bender 55 and lower wire bender 56 are adapted for clamping, either by active clamping, a clamp fit or interference fit, the trailing outer end and the leading outer end, respectively, of the length of lon wire 95 that has been cut off. The outer ends of the length of lon wire 95 that has been cut off are clamped in an area that is situated radially beyond the arched recesses 59. In that way the upper wire bender 55 and lower wire bender 56 are capable of bending the outer ends of the lengths of lon wire 95 that have been cut off in the bending directions F, G at a rotation of at least one hundred and eighty degrees around the upper wire 91 and the lower wire 92, respectively. The final shape of the bent lon wire 95 looks like a cramp or a staple, as shown in figure 3D.

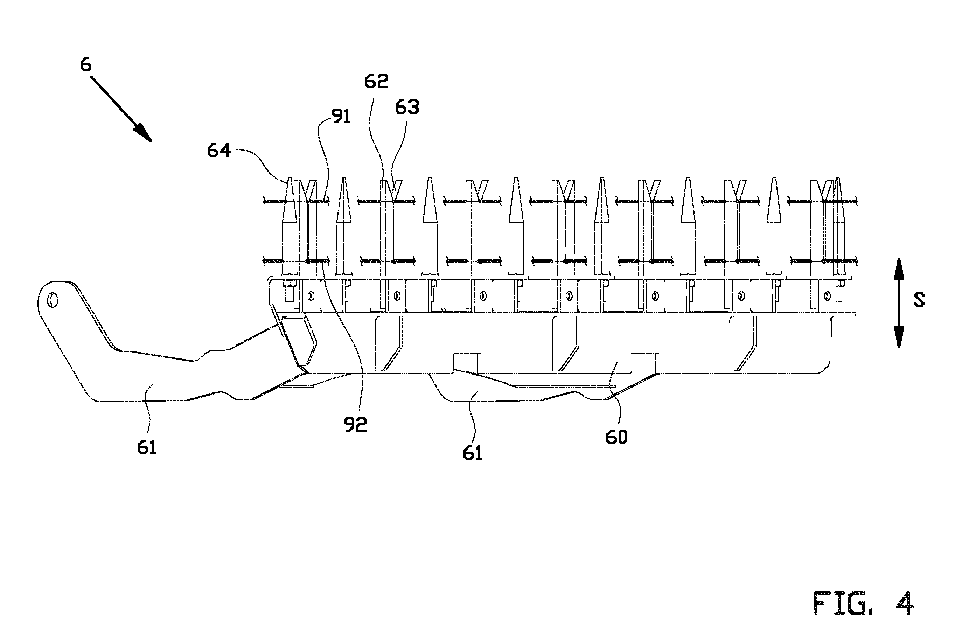

An accurate positioning of the upper wires 91 and lower wires 91 in question is of great importance to both the winding and coupling of the upper wires 91 and lower wires 92 as described above. In order to improve the positioning the processing section 3 has been provided with the above-mentioned separation assembly 6. The separation assembly 6 is shown exploded in figure 4 and comprises two lifting arms 61 that are connected to the substructure 31 via drives that are not further shown, for instance linear drives such as pneumatic or hydraulic cylinders. Between the lifting arms 61 a separation work beam 60 has been suspended which can be moved by the lifting arms 61 from the substructure 31 in a lifting direction S from and towards the operative position M.

A plurality of upright or upwardly oriented longitudinal wire guides 62 have been placed on the work beam 60. The number of longitudinal wire guides 62 and their position have been adapted to the number of longitudinal wires 90 to be manufactured. Each longitudinal wire guide 62 has been provided with an accommodation slot 63 which is open at the top, for accommodating and guiding both the upper wire 91 and the lower wire 92 in there. The longitudinal wire guides 62 fixate the position of the upper wires 91 and the lower wires 92 in the width direction X of the fascine mattress 8 to be manufactured, so that the picking up of the upper wires 91 and lower wires 92 by the connectors 44 and the couplers 54, which in the operative position M are moved downward into the respective translation directions T1, T2, can be simplified.

The separation assembly 6 further comprises a series of separation elements 64, in particular in the form of upright, pointy pins, which are adapted for in the upward lifting motion S of the separation work beam 60, being driven between the branches 84 present in the passage channel 34. The separation elements 64 thus separate or divide the branches 84 in the passage channel 34 into individual batches. The separation assembly 6, and in particular the separation elements 64, are so strong and rigid so as to be resistant against the pressing force of the pushing element 25 of the feeding section 2. The separation elements 64 therefore also form a composite pressure surface, for in cooperation with the pushing element 25 pushing the branches 84 together against it. In the passage direction B, the pressure surfaces 26 of the pushing element 25 are not in the extension of the longitudinal wire guides 62 or the separation elements 64, but have been shifted relative thereto in the transverse direction X so that in the passage direction B the pressure surfaces 26 can be inserted in between the longitudinal wire guides 62 and the separation elements 64.

As shown in figures 1A and 1B, the discharge section 7 comprises a discharge surface 70 situated in the passage direction B in the extension of the passage channel 34 and in this example at least extending up to the second wire reels 37. The discharge surface 70 preferably is formed by a bearing surface having a low slide resistance or a (passive) roller conveyor in order to facilitate the discharge of the manufactured fascine mattresses 8 in the discharge direction C.

The method for manufacturing the fascine mattress 8 described earlier using the device 1 described above will be elucidated below while referring to figures 5A-5L.

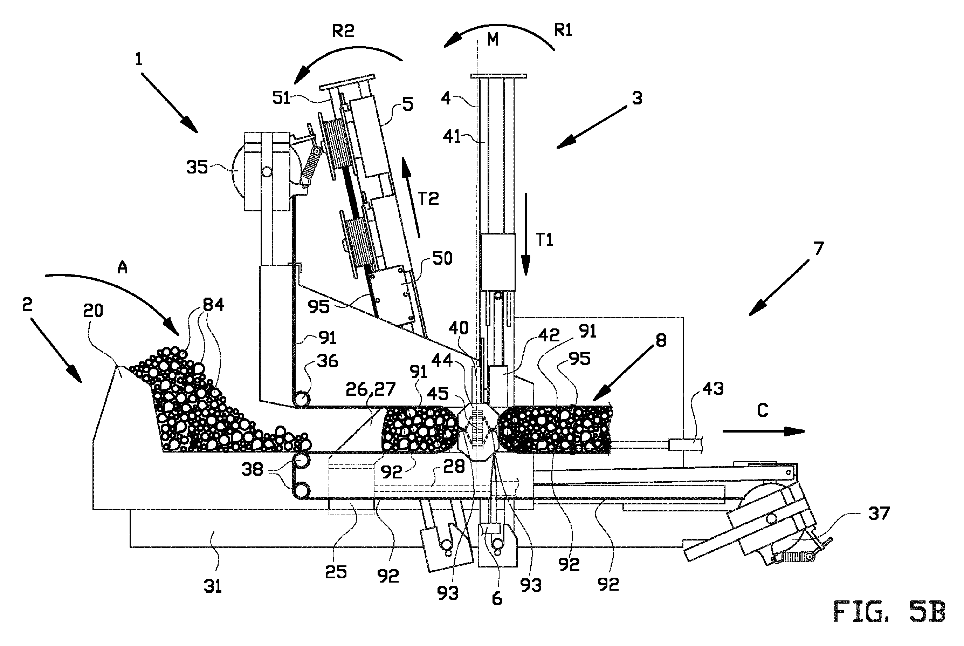

Figure 5A shows the situation in which the manufacturing of a previous fascine mattress 8 is completed and simultaneously the manufacturing of a next fascine mattress 8 is started with. In comparison with the situation in figure 1A the coupling assembly 5 has been rotated in the second rotary direction R2 into an inoperative position adjacent to the operative position M. In said inoperative position a next lon wire 95 can already be prepared. The winding assembly 4 has been rotated in the first rotary direction R1 into the operative position M. The columns 41 of the winding assembly 4 are now substantially vertical. The separation assembly 6 has been retracted to below the transport surface 33 of the passage channel 34. The connectors 44 are movable along the columns 44 in a vertical, first translation direction T1. In figure 5A the connectors 44 have been moved downward into a connecting position in which the upper wires 91 and the lower wires 92 have been picked up by the winding element 45. With the connectors 44 in the connecting position in the passage channel 34 the pushing element 25 has been shifted in the press direction P towards the connectors 44. As shown in figure 5A the pressure surfaces 26 have taken along a batch of branches 84 from the loading bin 20 and driven it into the passage channel 34. A superfluous quantity of branches 84 has been left behind in the loading bin 20 in order to be taken along in a next pressing cycle. The batch of branches 84 taken along is pressed together against the connectors 44. Depending on the pressing force set in the press direction P, the batch of branches 84 is pressed together in order to improve its density and/or the unity. A batch of branches 84 is now situated on both sides of the connectors 44, upstream and downstream in the passage direction B. In that way it can be ensured that winding in the next step according to figure 5B takes place on both sides of the connectors 44 under similar conditions.

Figure 5B shows the situation after the winding elements 45 of the connectors 44 have been rotated several revolutions, preferably at least four, in order to wind the upper wires 91 and the lower wires 92 of each longitudinal wire 90 into each other on both sides of the connectors 44, upstream and downstream in the passage direction B. The previous fascine mattress 8 is thus closed off both at the leading outer end and the trailing outer end by a winding 93, as a result of which the upper wires 91 and the lower wires 92 in the passage direction B are circumferentially connected to each other and form the longitudinal wires 90. Simultaneously the upper wires 91 and the lower wires 92 are connected to each other at the leading outer end of the next fascine mattress 8 by a winding 93 for confining the new batch of branches 84 present there.

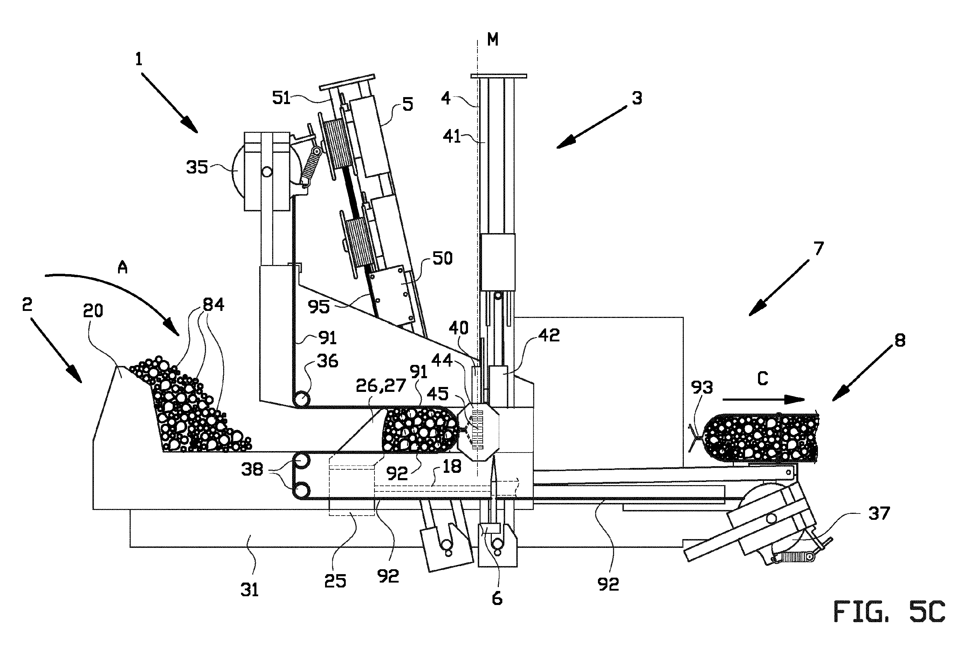

Figure 5C shows the situation in which the cutting elements 49 of the connectors 44 have been activated and in the winding direction W have been placed in abutment with the upper wire 91 and/or the lower wire 92 between the created windings 93. The winding elements 45 have subsequently been rotated another revolution, wherein the cutting elements 49 have severed the upper wires 91 and the lower wires 92 between the windings 93. As a result the lower wires 91 and the upper wires 92 of the previous fascine mattress 8 have been separated from the lower wires 91 and upper wires 92 of the next fascine mattress 8 and the previous fascine mattress 8 can be discharged in the discharge direction C.

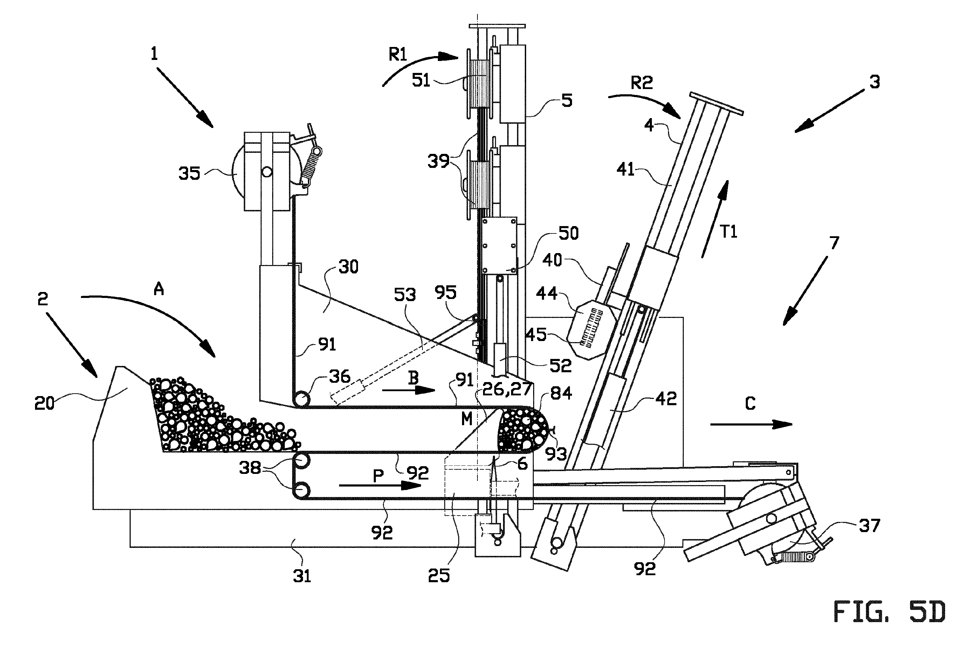

Figure 5D shows the situation in which the connectors 44 have been pulled back upwards in the first translation direction T1, to above the passage channel 34. Subsequently the winding assembly 4 has been rotated in the first rotary direction R1 into an inoperative position adjacent to the operative position M. In that way the operative position M has become vacant for the coupling assembly 5 that has been moved in the second rotary direction R2 into the operative position M. The columns 51 of the coupling assembly 5 are now substantially vertical. The couplers 54 can be moved along the columns 51 in the vertical, second translation direction T2. In the situation according to figure 5D the pushing element 25 has been moved in the passage direction B into the operative position M. Particularly the pressure surfaces 26 extend at least partly beyond the operative position M, so that the bundle of branches 84 that have meanwhile been pressed together and taken along, have been driven to beyond the operative position M.

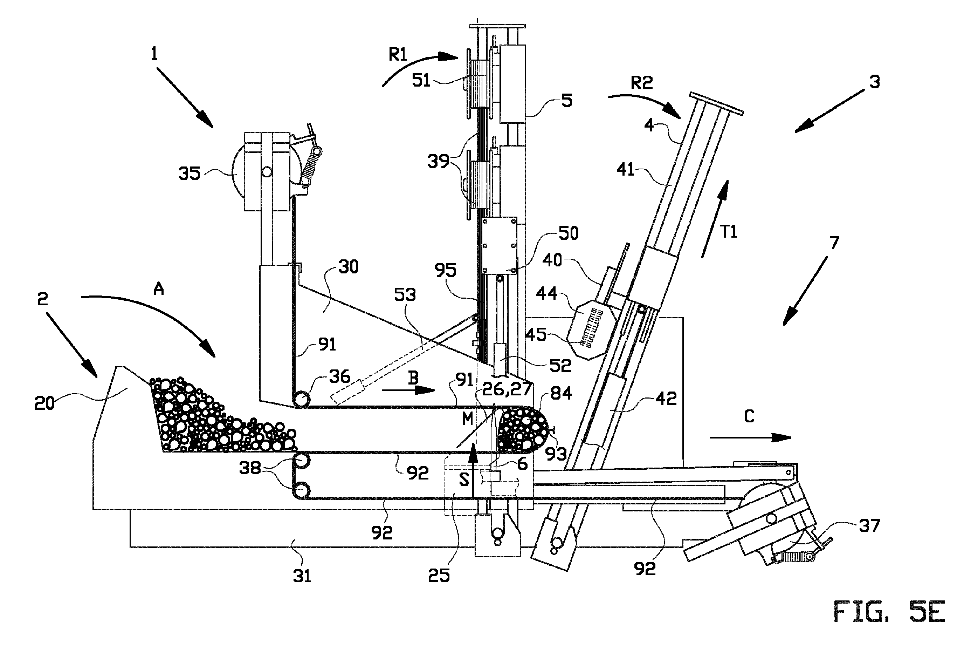

Figure 5E shows the situation in which the separation assembly 6 has been moved upward in the separation direction S as a result of which at the location of the operative position M the separation elements 64 extend between the pressure surfaces 16 in order to confine the batch of branches 84 that has been taken along, downstream of the operative position M. During the upward motion of the separation assembly 6 the longitudinal wire guides 62 have slid over the upper wires 91 and the lower wires 92 and the positions of the upper wires 91 and lower wires 92 have been fixated in transverse direction X.

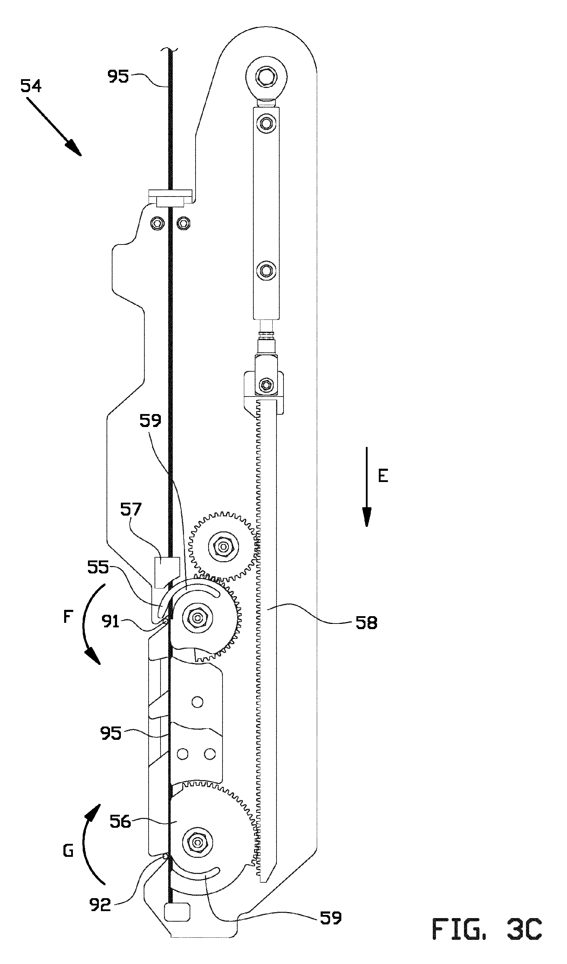

Figure 5F shows the situation in which the pushing element 25 has been retracted trough a passage channel 34 in a direction opposite the passage direction B in a returning path V. The pressure surfaces 26 of the pushing element stop the branches 84 in the loading bin 20 and prevent that newly supplied branches 84 hinder the operations in the passage channel 34. The couplers 54 have been moved downwards in the second translation direction T2, into the passage channel 34, in the operative position M adjacent to and immediately upstream of the separation assembly 6 and the branches 84 confined behind it. The separation elements 64 of the separation assembly 6 continue to confine the batch of branches 84 downstream of the operative position M, as a result of which the couplers 54 are free to operate in the operative position M. During the downward motion of the couplers 54, the upper wire benders 55 and lower wire benders 56 have slid over the upper wires 91 and the lower wires 92, respectively, wherein the upper wires 91 and the lower wires 92 have been accommodated in the curved recesses 59 as shown in figure 3C. A length of lon wire 95 has been supplied in the couplers 54 at the location of the passage channel 34. The lower wire bender 55 and the upper wire benders 56 of the couplers 54 have subsequently been rotated in their bending directions F, G for successively bending the leading outer end and the trailing outer end of the length of lon wire 95 around the upper wires 91 and the lower wires 92. In doing so the upper wire benders 55, in cooperation with the wire cutters 57, cut off the lon wire 95 to length. The cut-to-length lon wires 95 in each of the couplers 54 have now been transformed into staples and in the operative position M couple the upper wires 91 with the lower wires 92.

After completing the operations described above the pushing element 25 is pulled down, out of the passage channel 34, and along the bottom via a continuation of the returning path V returned to the initial position of the pressing path at the beginning of the loading bin 20.

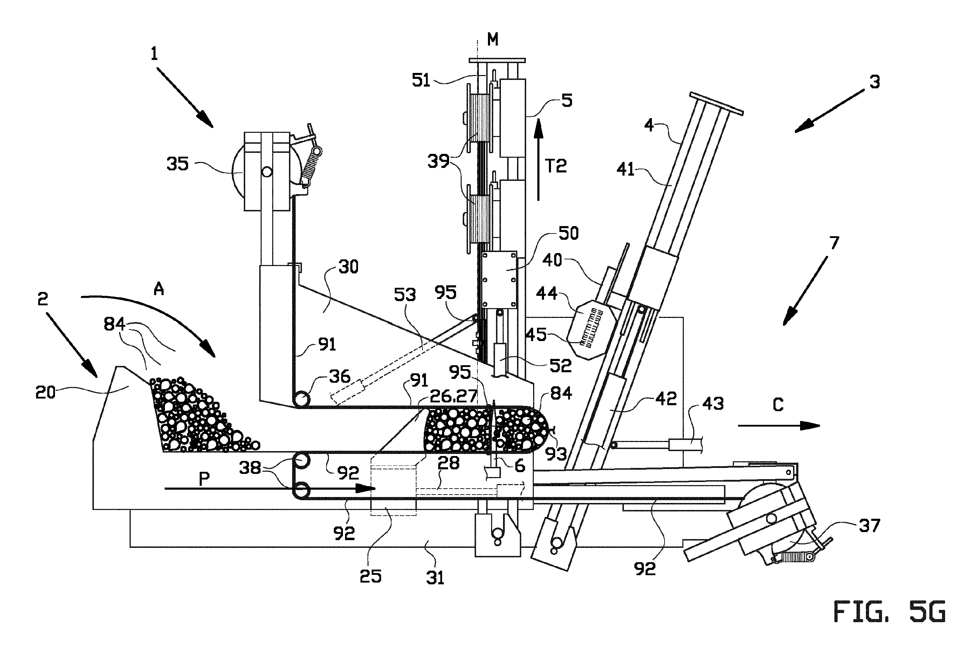

Figure 5G shows the situation in which the couplers 54 have been pulled away upwards in the second translation direction T2 out of the passage channel 34. The loading bin 20 has meanwhile been supplemented with new branches 84. The pushing element 25 has again been shifted in the press direction P in the direction of the passage channel 34 in order to drive a new batch of branches 84 into the passage channel 34. The pushing element 25 shifts onwards in the passage direction B until the new batch of branches 84 is pressed together against the separation elements 64 of the separation assembly 6.

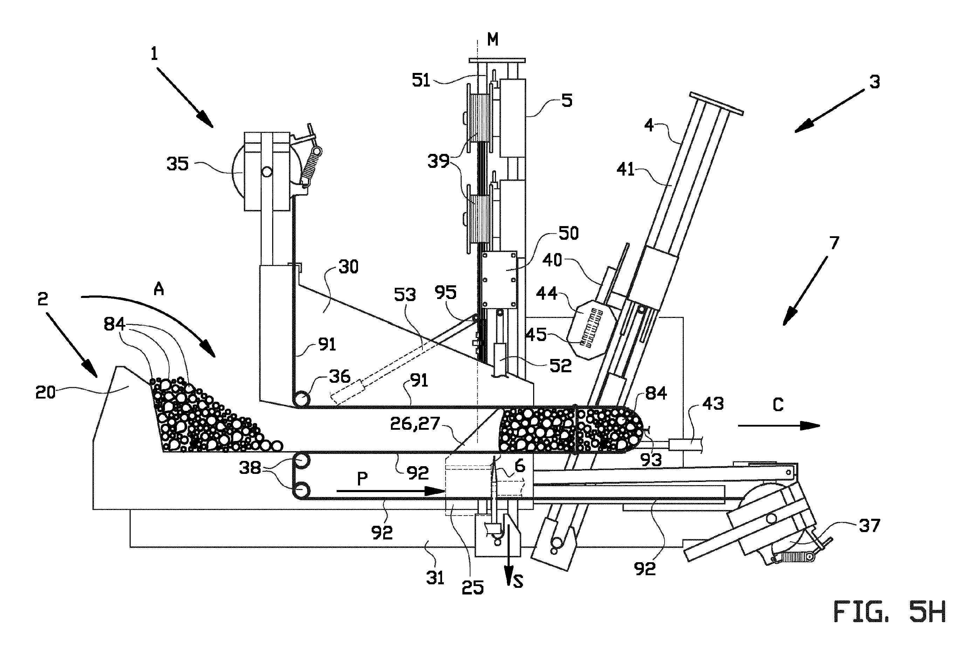

Figure 5H shows the situation in which the separation assembly 6 is pulled back downward to below the transport surface 33 of the passage channel 34. The passage channel 34 is now vacant and a new batch of branches 84 that has been pressed together can be driven to beyond the operative position M under the influence of the pushing element 25 shifting onward in the passage direction B.

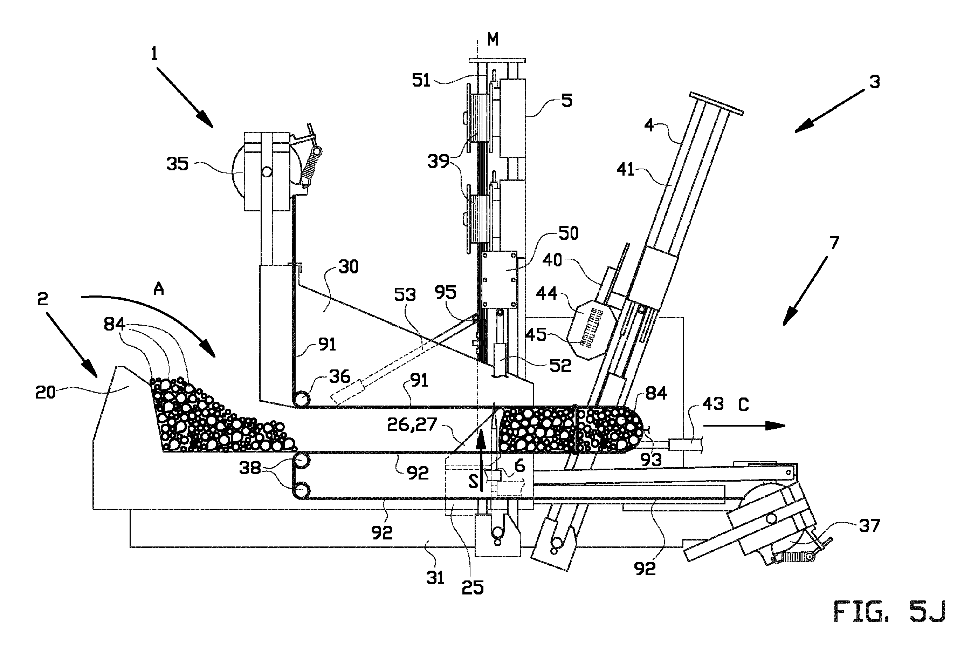

Figure 5J shows the situation in which the separation assembly 6 has been moved upward in the separation direction S as a result of which at the location of the operative position M the separation elements 64 extend between the pressure surfaces 26 in order for the new batch of branches 84 that has been taken along, together with the previous batch of branches 84, to be confined downstream of the operative position M. During the upward motion of the separation assembly 6 the longitudinal wire guides 62 have slid over the upper wires 91 and lower wires 92 and the positions of the upper wires 91 and lower wires 92 have been fixated in transverse direction X. The couplers 54 can now be moved downward again in the second translation direction T2 for arranging a next lon wire 95 around the upper wires 91 and the lower wires 92 at a distance from the previously arranged lon wire 95. Alternatively the fascine mattress 8 can be rounded-off according to the steps of figures 5A and 5B when its desired length has been attained. In this case the steps according to figures 5E-5K are repeated several times for arranging consecutive lon wires 95 between the consecutive batches of branches 84 in order to build up the fascine mattress 8 in parts.

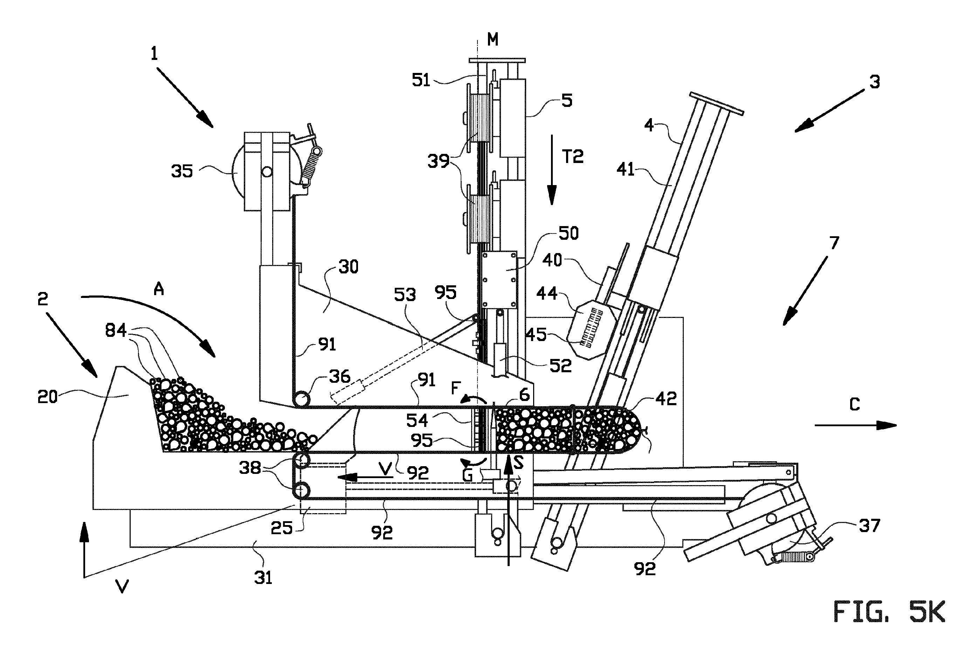

For the sake of completeness figure 5K shows the situation at the start of repeating the steps according to figures 5F-5K. The situation in figure 5K largely corresponds with the situation in figure 5G, however for a next part of the fascine mattress 8 to be manufactured. In figure 5K the couplers 54 have been taken downward in the second translation direction T2, for picking up and bending a second lon wire 95 into a staple 95, upstream in the passage direction B of the previously placed staple 95 according to figure 5G.

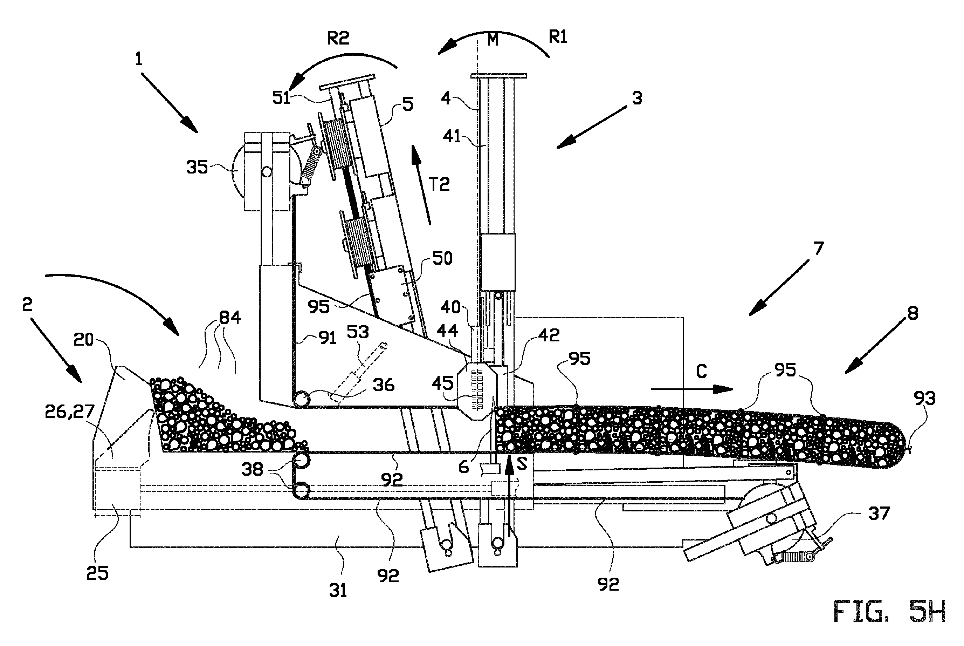

Figure 5L shows the shape of the fascine mattress 8 after the cycle of the steps 5F-5K has been repeated several times. The desired length of the fascine mattress 8 has been attained and the fascine mattress 8, like the previous fascine mattress 8, can be rounded-off in accordance with the steps according to figures 5A, 5B and 5C.

Using the method described above a fascine mattress 8 is mechanically obtained, having a high rigidity and/or firmness, in particular because the branches 84 in the bundle of branches 84 are bundled in the device 1 under a high pressing force and because the branches 84 pressed together are kept together like a mat 80 by the longitudinal wires 90 and the coupling elements 95. As a consequence, despite the branches 84 extending in a common main direction H in the mat 80, the fascine mattress 8 is sufficiently firm and/or rigid in both the transverse direction X and the longitudinal direction L so as to provide the fascine mattress 8 with the properties required for being used on a bank or bottom.

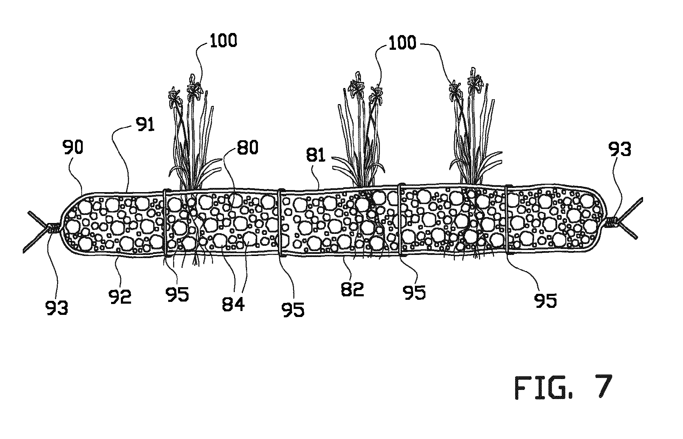

Figure 7 shows the fascine mattress 8 with plants 100, preferably helophytes and/or marsh plants. The plants 100 are manually inserted between the branches 84 of the mat 80 and due to the mutual clamping between the branches 84, are retained on the mat 80. The plants 100 are arranged at least on the main side of the mat 80, which after having been placed on the bank faces upwards. Because of the plants 100 the fascine mattresses 8 are now better suited to the underwater ecosystem.

The above description has been included to illustrate the operation of preferred embodiments of the invention and not to limit the scope of the invention. Starting from the above explanation many variations that fall within the spirit and scope of the present invention will be evident to an expert.

## Claims

1. Device for manufacturing a brushwood part, in particular a fascine mattress, wherein the brushwood part comprises a mat made of branches, wherein the branches of the mat have been bundled by a plurality of longitudinal wires circumferentially extending in a longitudinal direction of the mat and wherein the branches extend in a common main direction in the mat, transverse to the longitudinal direction of the mat, wherein the device comprises a processing section having a passage channel for in a passage direction feeding through several batches of branches for the mat, wherein the branches in their main direction extend transverse to the passage direction, wherein the processing section furthermore comprises upper wire guides and lower wire guides for guiding upper wires and lower wires, respectively, in the passage direction along the branches that have been fed through, wherein the processing section comprises connectors for connecting the upper wires and the lower wires to each other at the outer ends of the mat, when considered in the longitudinal direction of the mat, for forming the circumferentially extending longitudinal wires, wherein the processing section is provided with a separation assembly for, after feeding a first batch of branches, separating the first batch of branches from a next batch of branches for the same mat, wherein the processing section furthermore comprises couplers for arranging coupling elements between the consecutive batches, which coupling elements couple the upper wires between the consecutive batches to the lower wires.

2. Device according to claim 1, wherein during said coupling the separation assembly is situated downstream, in passage direction, from the couplers in order to keep the couplers free, in passage direction, from the first batch of branches.

3. Device according to any one of the preceding claims, wherein the coupling elements are staples, wherein each coupler is provided with an upper wire bender and a lower wire bender for receiving and bending a length of wire, in particular a lon wire, around the upper and lower wire, respectively, extending at the location of the coupler.

4. Device according to any one of the preceding claims, wherein the couplers have been arranged on a coupling work beam, wherein the coupling work beam is movable between an operative position in which the couplers can be positioned in a coupling position in the passage channel for coupling the upper wires to the lower wires and an inoperative position in which the couplers are situated outside of the passage channel, preferably wherein the connectors have been arranged on a connector work beam and wherein the connector work beam is movable between an operative position in which the connectors can be positioned in a connecting position in the passage channel and an inoperative position in which the connectors are situated outside of the passage channel, preferably wherein the operative position of the coupling work beam and the operative position of the connector work beam are the same operative position and wherein the coupling work beam and the connector work beam are adapted for alternately being moved into the operative position.

5. Device according to any one of the preceding claims, wherein each connector comprises a winding element for engaging the upper wire and lower wire extending at the location of the winding element, wherein the winding element is adapted for being rotated in a winding direction for several revolutions in order to wind the engaged upper wire and the lower wire into each other, preferably wherein the winding element of the connector in question is provided with an incised winding profile for allowing the upper wire and lower wire extending at the location of the winding element to pass through in passage direction, and wherein the winding profile is provided with oppositely oriented hook-shaped incisions that are open in the winding direction for receiving the upper wire and the lower wire, preferably wherein the winding element is adapted for winding the upper wire and lower wire extending at the location of the winding element into each other in passage direction on either side of the winding element and wherein each connector is furthermore provided with a cutting element for cutting through the upper wire and the lower wire between both windings in passage direction.

6. Device according to any one of the preceding claims, wherein the device furthermore comprises a feeding section for feeding the branches and for supplying the fed branches in consecutive batches to the processing section, wherein the feeding section is provided with a loading bin for receiving the branches and a pushing element movable through the loading bin for driving the branches fed into the loading bin to the processing section in separate batches, preferably wherein the pushing element is adapted for cooperation with the separation assembly for pressing the next batch of branches together between the pushing element and the separation assembly, when the separation assembly separates the first batch of branches from the next batch of branches, preferably wherein the pushing element has a pressing force of at least one hundred kilogram, preferably at least two hundred kilogram and most preferably at least five hundred kilogram, and/or preferably wherein the pushing element has a pressing force in the range of up to at least five thousand kilogram, preferably up to at least six thousand kilogram and most preferably up to a maximum of seven thousand kilogram.

7. Device according to claim 6, wherein the pushing element is movable in passage direction to beyond the separation assembly for driving the batch of branches to beyond the separation assembly, preferably wherein the pushing element is adapted for returning to an initial position of pushing into the loading bin, outside of the passage channel.

8. Method for manufacturing a brushwood part, in particular a fascine mattress, including a device according to any one of the claims 1-7, wherein the method comprises the steps of:
a) connecting the upper wires and the lower wires to each other at the leading outer end of the brushwood part to be manufactured in passage direction;
b) feeding through a first batch of branches for the mat in passage direction;
c) guiding the upper wires and lower wires in passage direction along the first batch of branches;
d) after feeding a first batch of branches, separating the first batch of branches from the next batch of branches;
e) arranging coupling elements between the consecutive batches, which coupling elements couple the upper wires between the consecutive batches to the lower wires;
f) repeating steps b) up to and including e) for the next batch and/or several next batches;
g) connecting the upper wires and the lower wires to each other at the trailing outer end of the brushwood part to be manufactured after feeding the last batch of branches for the mat in passage direction, in order to form the circumferentially extending longitudinal wires together with the connection obtained according to step a) at the leading outer end of the brushwood part to be manufactured.

9. Method according to claim 8, wherein between steps b) and d) the method comprises the step of pressing the batch of branches fed in step b) together, preferably wherein the batch fed in step b) is pressed together using a pressing force of at least one hundred kilogram, preferably at least two hundred kilogram and most preferably at least five hundred kilogram, and/or preferably wherein the batch fed in step b) is pressed together using a pressing force in a range of up to at least five thousand kilogram, preferably up to at least six thousand kilogram and most preferably up to a maximum of seven thousand kilogram.

10. Method according to claim 8 or 9, wherein step g) regarding the connection to each other of the upper wires and lower wires at the trailing outer end of the brushwood part to be manufactured also causes the connection to each other according to step a) of the upper wires and lower wires of a next brushwood part to be manufactured upstream of the brushwood part manufactured in steps a) up to and including g), wherein the method comprises repeating the steps b) up to and including g) for the next brushwood part.

11. Brushwood part, in particular a fascine mattress, comprising a mat made of branches, wherein the branches of the mat have been bundled by a plurality of longitudinal wires circumferentially extending in a longitudinal direction of the mat, wherein at least ninety percent of the branches in the bundle extend in a common main direction in the mat, transverse to the longitudinal direction of the mat, wherein each longitudinal wire comprises an upper wire extending at a first side of the mat along the branches and a lower wire extending along a second, opposite side of the mat along the branches, wherein the mat has been built up in the longitudinal direction from several batches of the branches between which coupling elements have been arranged that couple the upper wires between the consecutive batches to the lower wires.

12. Brushwood part according to claim 11, wherein all or substantially all branches in the mat extend in a common main direction.

13. Brushwood part according to claim 11 or 12, wherein the percentage by volume of branches in relation to the overall volume of the brushwood part is at least twenty-five percent, preferably at least thirty percent and most preferably at least forty percent.

14. Brushwood part according to any one of the claims 11-13, wherein the number of longitudinal wires is at least five, and preferably at least seven, preferably wherein the intermediate distance between the longitudinal wires in a direction perpendicular to the longitudinal direction is forty centimetres at the most, and most preferably thirty centimetres at the most, and/or wherein the intermediate distance between the coupling elements per longitudinal wire is thirty centimetres at the most, and preferably twenty centimetres at the most.

15. Brushwood part according to any one of the claims 11-14, wherein the brushwood part is provided with planting connected to the mat, preferably helophytes and/or marsh plants.

16. Brushwood part according to any one of the claims 11-15, obtained or to be obtained using the method according to any one of the claims 8-10.
